# EUROPÄISCHE PATENTSCHRIFT

(11) **EP 0 612 559 B1**
(45) Veröffentlichungstag und Bekanntmachung des Hinweises auf die Patenterteilung: **05.11.1997**
(21) Anmeldenummer: 94102086.9
(22) Anmeldetag: 10.02.1994
(51) Int. Cl.: B01J 2/20, B30B 11/22, A23G 3/28

(54) **Extrusionsmaschine**
Extrusions machine
Machine d'extrusion

(30) Priorität: 26.02.1993 DE 4306014
(43) Veröffentlichungstag der Anmeldung: 31.08.1994
(73) Patentinhaber: Firma EMIL LIHOTZKY Maschinenfabrik, D-94441 Plattling (DE)
(72) Erfinder: Czarnetzki, Robert, Dipl.-Ing., D-94469 Deggendorf (DE); Lihotzky-Vaupel, Wolfram, D-94557 Niederalteich (DE)
(74) Vertreter: Weber, Otto Ernst, Dipl.-Phys.

(56) Entgegenhaltungen:
- CH-A- 521 225
- FR-A- 2 230 407

## Beschreibung

Die Erfindung betrifft eine Extrusionsmaschine, insbesondere zur Extrusion von chemischen Granulaten, vorzugsweise für Waschmittel, mit einem Maschinenrahmen, einer Extrusionspresse mit einer Materialeintrittsöffnung und einer Materialaustrittsöffnung, einem Antrieb für die Extrusionspresse sowie einem im Bereich der Materialaustrittsöffnung vorgesehenen Formwerkzeug und einem diesem zugeordneten Schneidwerkzeug.

CH-A-521 225 beschreibt Matrizen zur Formung von Presslingen kleiner Abmessungen in Futtermittelpressen.

Bei derartigen bekannten Extrusionsmaschinen ist das Formwerkzeug an der Extrusionspresse stationär angebracht. Auch das Schneidwerkzeug ist bezüglich der Extrusionspresse stationär angeordnet. Während der Produktion mit der Extrusionspresse ist es erforderlich, in gewissen Zeitabständen das Formwerkzeug und/oder Schneidwerkzeug zu wechseln. Dazu ist die Extrusionspresse zunächst anzuhalten, so daß der Produktionsvorgang unterbrochen wird. Nach dem Auswechseln des Formwerkzeugs bzw. des Schneidwerkzeugs muß die Produktion dann wieder angefahren werden. Dieser Anfahrprozeß liefert jedoch zunächst einen gewissen Produktionsausschuß, bis daß der Produktionsprozeß wieder so eingestellt ist, daß die erwünschte Qualität erzielt wird.

Zur Extrusion von Waschmitteln gibt es beispielsweise Herstellungsverfahren, bei denen zunächst Trockenstoffe verwogen werden und anschließend über mehrere Stockwerke zu einem Mischer transportiert werden. Dort werden verschiedene Flüssigkeiten den pulvrigen Stoffen zugesetzt. Das Gemisch wird dann dem Extruder zugeführt. Muß nun, bedingt durch einen Wechsel eines Formwerkzeugs oder eines Schneidwerkzeugs am Extruder dieser Fertigungsprozeß unterbrochen werden, so verbleibt im Mischer eine Charge trockenes Produkt. Beim Wiederanfahren der Fertigungsanlage muß nun dieses Trockenprodukt zunächst vor dem Extruder ausgeschleust werden, da das Trocken-Produkt sonst eine Blockierung der Extruderschnecke verursachen würde. Folglich muß zunächst der Mischvorgang des Fertigungsprozesses soweit angefahren werden, daß der Mischer ein gewünschtes extrudierbares Vorprodukt liefert. Bis die vom Mischer gelieferte Mischung plastisch genug ist, werden mehrere Hundert Kilo Material vor dem Extruder ausgeschleust. Die Überprüfung der vom Mischer abgegebenen Mischung erfolgt üblicherweise manuell und ist zeit- und arbeitsaufwendig. Werden diese Vorarbeiten beim Wiederanfahren der Extrusionsmaschine nicht gewissenhaft ausgeführt, so ist infolge eine aufwendige Reinigung des Extruders in sämtlichen produktführenden Organen erforderlich.

Ein Wechsel eines Formwerkzeugs oder eines Schneidwerkzeugs bei einer derartigen Extrusionsmaschine verursacht also nicht nur einen Produktionsausfall während der Wechselarbeiten, sondern darüber hinaus auch einen erheblichen Produktionsverlust beim Wiederanfahren der Extrusionsmaschine.

**Aufgabe** der vorliegenden Erfindung ist es daher, eine Extrusionsmaschine der eingangs genannten Gattung so weiterzubilden, daß Produktionsunterbrechungen zum Wechsel eines Formwerkzeugs und/oder eines Schneidwerkzeugs möglichst ganz vermieden werden.

Diese Aufgabe wird gemäß dem kennzeichnenden Teil des Patentanspruchs 1 dadurch gelöst, daß eine Wechslervorrichtung vorgesehen ist, welche ein Trägerelement für zumindest zwei auswechselbare Formwerkzeuge und/oder Schneidwerkzeuge aufweist, und daß das Trägerelement in einer Ebene im wesentlichen parallel zur Ebene der Materialaustrittsöffnung relativ zur Extrusionspresse bewegbar angeordnet ist.

Die Wechslervorrichtung gestattet es, während des Produktionsprozesses das Form- und/oder Schneidwerkzeug schnell und einfach auszuwechseln, da kurzfristig zwischen zwei Werkzeugen "umgeschaltet" werden kann, wobei das neue Werkzeug vor die Öffnung der Extrusionspresse bewegt wird,während das benutzte Werkzeug aus der Öffnung der Extrusionspresse heraus bewegt wird und anschließend aus der Wechslervorrichtung entnommen und überholt oder gereinigt werden kann.

Durch die Erfindung ist ein Abstellen des Produktionsprozesses für einen Formwerkzeugwechsel bzw. einen Schneidwerkzeugwechsel nicht mehr erforderlich und es fallen auch keine diesbezüglichen Produktionsabfalle mehr an. Die Extrusionsmaschine und die vorgeschalteten Maschinen können kontinuierlich durchlaufen.

Das Trägerelement der Wechslervorrichtung kann entweder nur die Schneidwerkzeuge oder nur die Formwerkzeuge aufweisen, wobei dann jeweils das Formwerkzeug bzw. das Schneidwerkzeug bezüglich der Extrusionspresse auf herkömmliche Weise stationär angeordnet sind. In einer besonders bevorzugten Ausgestaltung werden jedoch sowohl die Formwerkzeuge als auch die Schneidwerkzeuge vom Trägerelement aufgenommen, so daß die Wechslervorrichtung Formwerkzeuge und Schneidwerkzeuge auswechseln kann. Das hat den Vorteil, daß das Bedienungspersonal bei jedem Wechsel des Formwerkzeugs auch gleichzeitig das Schneidwerkzeug sichten und kontrollieren kann und dann bei Bedarf entscheiden kann, ob auch das Schneidwerkzeug ausgewechselt wird oder ohne Austausch wiederverwendet wird.

In einer vorteilhaften Ausgestaltung ist das Trägerelement kreisförmig ausgebildet und in einem exzentrisch an der Extrusionspresse im Bereich von deren Materialaustrittsöffnung angebrachten Wechslergehäuse drehbar gelagert. Sind dabei die Formwerkzeuge und/oder die Schneidwerkzeuge auf einer zum Drehpunkt des Trägerelementes konzentrischen Kreisbahn angeordnet, so läßt sich durch einfaches Weiterdrehen des Trägerelements ein Formwerkzeug nach dem anderen vor die Austrittsöffnung der Extrusionspresse bringen. Diese "revolverartige" Anordnung gestattet aufgrund des möglichen schnellen Formwerkzeug-Wechsels auch einen problemlosen Produktions-Wechsel.

In einer weiteren Ausgestaltung ist das Trägerelement teilkreisförmig ausgebildet und in einem exzentrisch an der Extrusionspresse im Bereich von deren Materialaustrittsöffnung angebrachten Wechslergehäuse schwenkbar gelagert. Diese Ausbildung wird bevorzugt dann angewendet, wenn nur zwischen zwei oder drei Formwerkzeugen bzw. Schneidwerkzeugen gewechselt wird, was dann durch eine Pendelbewegung des Trägerelementes erfolgt. Während das eine Formwerkzeug bzw. Schneidwerkzeug in Betrieb ist, kann das andere Werkzeug ausgewechselt werden.

Wenn die Formwerkzeuge und/oder die Schneidwerkzeuge den gleichen radialen Abstand von der Dreh- bzw. Schwenkachse des Trägerelementes aufweisen, dann kann der Werkzeugwechsel durch eine einfache Drehbewegung bzw. Schwenkbewegung um die Trägerelementenachse erfolgen.

Eine weitere vorteilhafte Ausgestaltung der Erfindung ist dadurch gegeben, daß das Trägerelement in einem an der Extrusionspresse im Bereich von deren Materialaustrittsöffnung angebrachten Wechslergehäuse im wesentlichen translatorisch verschiebbar aufgenommen ist, wobei die jeweiligen Anordnungen aus Formwerkzeug und/oder Schneidwerkzeug in Verschieberichtung nebeneinander angeordnet sind. Diese Ausgestaltung stellt eine Alternative zur Ausführung mit pendelndem Trägerelement dar, so daß auch mit dieser Ausgestaltung die gleichen Vorteile erzielt werden.

Vorteilhaft ist außerdem, wenn das Schneidwerkzeug von einer auf der der Extrusionspresse abgewandten Seite des Formwerkzeugs angeordneten, rotierbar gelagerten Messeranordnung gebildet ist, die von einem Schneideantrieb beaufschlagt ist. Bei einem derartigen Rotationsmessersystem berühren die Messer unmittelbar das Formwerkzeug bzw. werden während ihrer Rotation an das Formwerkzeug angepreßt. Die Drehzahlen der Messeranordnung können dabei zwischen wenigen Umdrehungen pro Minute bis zu mehreren Tausend Umdrehungen pro Minute betragen. Hierzu ist zwischen Antrieb und Schneidwerkzeug ein Getriebe vorgesehen, das vorzugsweise stufenlos verstellbar ist; aber auch der Antrieb selbst kann stufenlos verstellbar sein. Ein besonders kompakter Aufbau ist dann gewährleistet, wenn im Antriebsstrang zwischen Schneidantrieb und Schneidwerkzeug zumindest ein Umlenkgetriebe vorgesehen ist.

Ist im Antriebsstrang zwischen Schneidantrieb und Schneidwerkzeug zumindest eine Ausgleichswelle vorgesehen, so treten auch bei hohen Drehzahlen des Schneidwerkzeugs nur geringfügige Schwingungen auf.

Ist die Wechsleranordnung scharnierartig klappbar an der Extrusionspresse angebracht, so wird hierdurch einerseits ein leichtes Auswechseln der gesamten Wechsleranordnung ermöglicht und andererseits ein schneller, einfacher Zugang zum Innenraum der Extrusionspresse geschaffen, wodurch Reparatur- und Reinigungsarbeiten erleichert werden.

Im Wechslersystem können auch Heiz- und/oder Kühlanordnungen vorgesehen sein, falls dies für einen entsprechenden Produktionsprozeß erforderlich ist.

Weitere vorteilhafte Ausgestaltungen der Erfindung werden in den verbleibenden Unteransprüchen angegeben.

Die Erfindung wird nachfolgend anhand eines Beispiels unter Bezugnahme auf die Zeichnung näher erläutert; in dieser zeigt:
- Fig. 1: eine geschnittene Seitenansicht einer Extrusionsmaschine gemäß der vorliegenden Erfindung,
- Fig. 2: eine Frontalansicht der Extrusionsmaschine gemäß Fig. 1 in Richtung des Pfeiles A in Fig. 1,
- Fig. 3: eine Ansicht ähnlich Fig. 2 einer abgewandelten Extrusionsmaschine mit pendelndem Trägerelement,
- Fig. 4: eine Ansicht entsprechend Fig. 2 mit einem translatorisch verfahrbaren Trägerelement,
- Fig. 5: eine schematische Seitenansicht einer Extrusionsmaschine mit stationärem Formwerkzeug und wechselbarem Schneidwerkzeug und
- Fig. 6: eine schematische teilweise geschnittene Seitenansicht einer Extrusionsmaschine mit stationärem Schneidwerkzeug und wechselbarem Formwerkzeug.

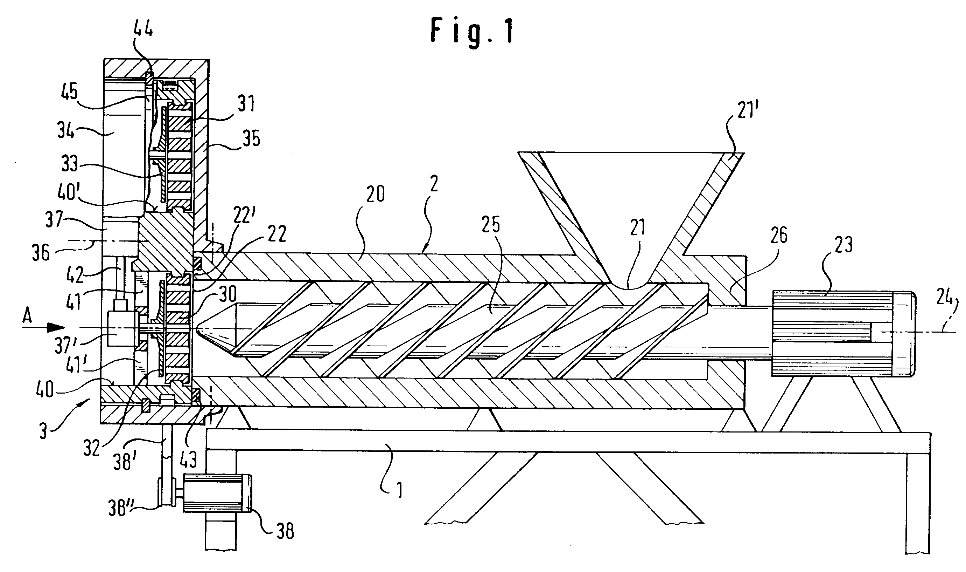

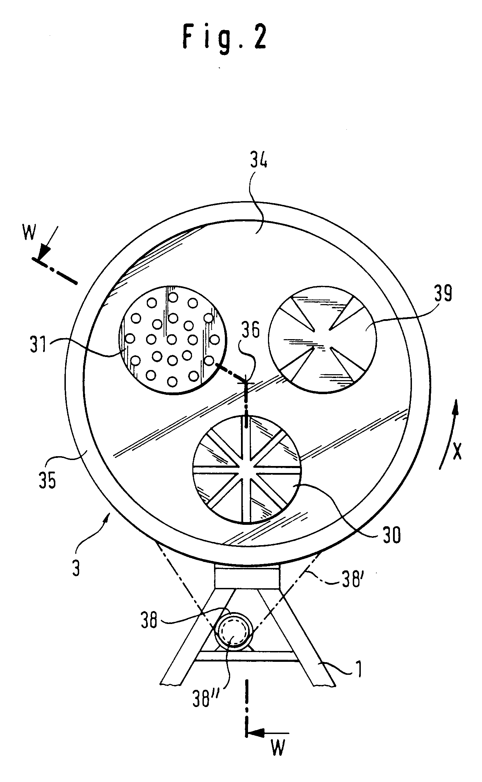

Fig. 1 zeigt eine Extrusionsmaschine, beispielsweise zur Extrusion von Teigwaren, wie Nudeln, gemäß einer ersten Ausführungsform der Erfindung in geschnittener Seitenansicht entlang der Linie WW in Figur 2. Auf einem schematisch angedeuteten Maschinenrahmen 1 ist das zylinderartige Gehäuse 20 einer Extrusionspresse 2 befestigt. Im Zylindergehäuse 20 ist eine drehbare Schnekkenwelle 25 aufgenommen, die durch die an einem ersten Ende des Zylindergehäuses 20 vorgesehene Stirnwand 26 abdichtend hindurchgeführt ist, und dort mit einem Antriebsmotor 23 drehbar verbunden ist. Der Antriebsmotor 23 ist ebenfalls auf dem Maschinenrahmen 1 abgestützt. In der Nähe der Stirnwand 26 ist im Zylindergehäuse 20 eine Materialeintrittsöffnung 21 vorgesehen, die in Form eines Einfülltrichters 21' ausgebildet ist.

Das andere Ende des Zylindergehäuses 20 bildet eine Materialaustrittsöffnung 22. Die Schneckenwelle 25 endet im Bereich der Materialaustrittsöffnung 22.

Am Zylindergehäuse 20 ist im Bereich der Austrittsöffnung 22 ein Gehäuse 35 einer Wechslervorrichtung für Form- und Schneidwerkzeuge angebracht. Das Wechslergehäuse 35 ist kreisförmig ausgebildet und mittels eines exzentrisch daran vorgesehenen Flansches am Zylindergehäuse 20 angeflanscht, wobei die Befestigung auf dem Fachmann bekannte Weise, beispielsweise durch radial angeordnete Verschraubungen (durch strichpunktierte Linien angedeutet) erfolgt.

Im Wechslergehäuse 35 ist ein kreisförmiges Trägerelement 34 konzentrisch zum Wechslergehäuse 35 angeordnet. Das Trägerelement 34 ist im Wechslergehäuse 35 drehbar gelagert, wobei die Drehachse 36 des Trägerelementes 34 parallel zur Längsachse 24 des Zylinders 20 der Extrusionspresse 2 verläuft. Dadurch erfolgt eine Drehung des Trägerelementes 34 in einer Ebene, die parallel zur Ebene der Materialaustrittsöffnung 22 verläuft.

Das Trägerelement 34 wird von zwei achsparallelen, abgestuften Bohrungen 40, 40' durchdrungen. Die Bohrungen 40, 40' sind so angeordnet, daß der Abstand zwischen ihrer jeweiligen Mittelachse und der Drehachse 36 des Trägerelements 34 dem Abstand zwischen der Drehachse 36 und der Achse 24 des Zylindergehäuses 20 der Extrusionspresse 2 im wesentlichen entspricht. Auf diese Weise können die Bohrungen 40, 40' durch Verdrehen des Trägerlelementes 34 jeweils zentrisch vor die Materialaustrittsöffnung 22 der Extrusionspresse 2 gebracht werden.

In den Bohrungen 40, 40' ist jeweils ein Formwerkzeug 30, 31 eingesetzt, das eine Begrenzung der Bohrung 40, 40' bildet. Auf der von der Materialaustrittsöffnung 22 wegweisenden Seite des Formwerkzeugs 30, 31 ist ein Schneidwerkzeug 32, 33 angeordnet, das aus einer rotierbaren Halterung besteht, in welche eine Mehrzahl von Messern radial eingesetzt ist. Der Durchmesser dieser Messeranordnung, also des Schneidwerkzeugs 32, 33, entspricht dabei im wesentlichen dem Durchmesser des Formwerkzeugs 30, 31. Das Schneidwerkzeug 32, 33 ist von einem Motor oder Hydraulikantrieb (37) und einem Winkelgetriebe (37') beaufschlagt. Das Winkelgetriebe 37' ist dabei über Radialträger 41, 41' zentral in der Bohrung 40, 40' gehaltert. Eine sich radial vom Winkelgetriebe 37' erstreckende Gelenkwelle 42 führt zum Motor oder Hydraulikantrieb 37, der in einer rückwärtigen Ausnehmung des Trägerelementes 34 angebracht ist.

Zwischen der Stirnseite 22' des Zylindergehäuses 20 im Bereich der Materialaustrittsöffnung 22 und der rückwärtigen Stirnseite des Trägerelementes 34 ist eine ringförmige Dichtung 43 auf dem Fachmann bekannte Weise eingesetzt.

Die Dichtung 43 dichtet dabei den unter hohem Druck stehenden Innenraum des Zylindergehäuses 20 der Extrusionspresse 2 gegenüber dem Wechslergehäuse 35 ab, so daß in diesem Bereich beim Übergang vom Zylindergehäuse 20 zum Trägerelement 34 keine Leckage entsteht.

Die durch den von der Extrusionspresse 2 erzeugten Druck auf das Trägerelement 34 wirkende Axialkraft wird durch eine umlaufende Radial-/Axiallagerung zwischen dem Trägerelement 34 und dem Wechslergehäuse 35 aufgenommen. Diese Lagerung 44 ist nur schematisch dargestellt.

Das Trägerelement 34 ist an seinem Umfang mit einer umlaufenden Nut 45 versehen, die an ihrem Nutgrund mit Zähnen versehen ist und eine schematisch dargestellte Antriebskette 38' aufnimmt. Die Antriebskette 38' läuft über ein Ritzel 38'', das auf der Achse eines Elektromotors 38 angebracht ist. Der Elektromotor 38 ist am Maschinenrahmen 1 abgstützt. Anstelle eines Kettenantriebs für das Trägerelelement 34 können auch ein Schneckenantrieb, ein Zahnradantrieb, ein Stirnrad-, Kegelrad-, oder sonstige Antriebe oder Getriebemotoren vorgesehen sein. Der Elektromotor kann wahlweise auch durch einen pneumtischen oder hydraulischen Motor ersetzt werden.

Fig. 2 zeigt eine Frontalansicht der Extrusionsmaschine nach Fig. 1 in Richtung des Pfeiles A in Fig. 1. Das kreisrunde und um die Achse 36 rotierbare Trägerelement 34 weist drei auf einer gemeinsamen Kreisbahn gelegene Formwerkzeuge 30, 31, 39 auf, die durch Drehung des Trägerelementes 34 um einen Winkel von etwa 120° revolverartig vor die Materialaustrittsöffnung 22 der Extrusionspresse 2 bewegt werden können.

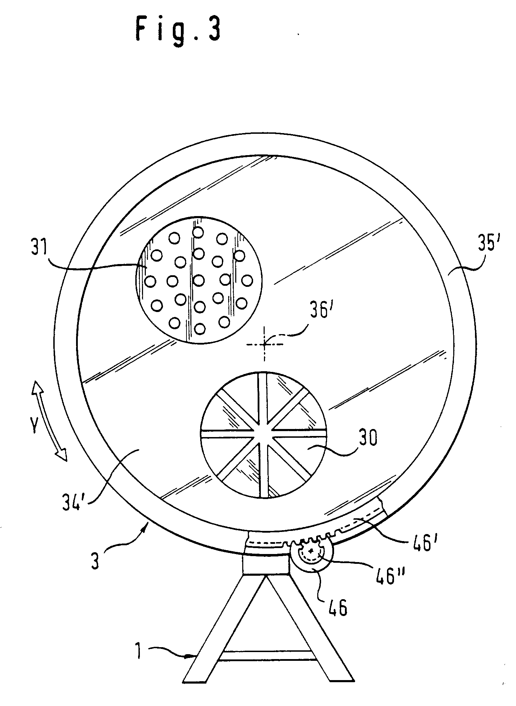

In Fig. 3 ist eine Abwandlung der Extrusionsmaschine nach Fig. 2 dargestellt, wobei das Trägerelement 34' teilkreisförmig ausgebildet ist und zwei Formwerkzeuge 30, 31 aufweist. Durch eine Pendelbewegung entsprechend dem in Fig. 3 gezeigten Doppelpfeil Y können die Formwerkzeuge sowie die ihnen zugeordneten Schneidwerkzeuge abwechselnd vor die Materialaustrittsöffnung 22 der Extrusionspresse 2 geschwenkt werden. Als Antrieb für die Schwenkung dient hier ein Elektromotor 46, auf dessen Welle ein Ritzel 46'' angebracht ist, das mit einem Zahnkranz 46' in kämmender Verbindung steht, wobei der Zahnkranz 46' am Umfang des Trägerelementes 34' befestigt ist. Auf diese Weise kann durch Umkehr der Drehrichtung des Elektromotors 46 das Trägerelement 34' um seine Achse 36' im Wechslergehäuse 35' pendeln.

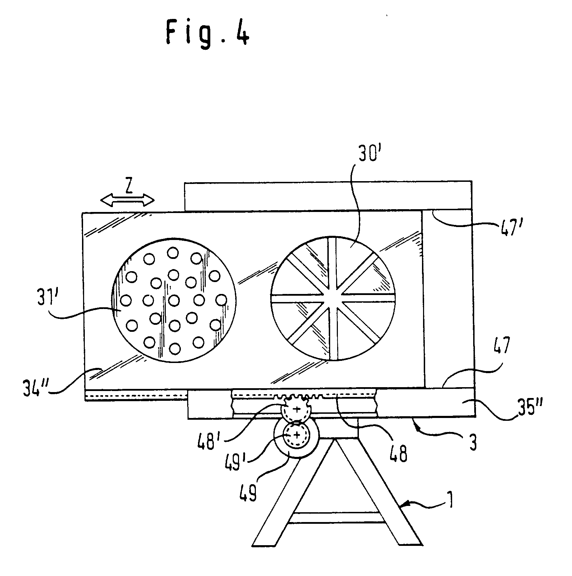

Fig. 4 zeigt eine Ausführungsform, bei der das Wechslergehäuse 35'' im wesentlichen rechtwinklig ausgebildet ist und eine untere (47) und eine obere (47') Schiene für die Aufnahme des ebenfalls rechtwinkligen Trägerelementes 34'' besitzt.

Im Trägerelement 34'' sind horizontal nebeneinander jeweils zwei Anordnungen 30', 31' aus einem Formwerkzeug und einem Schneidwerkzeug angeordnet. An seiner Unterseite ist das Trägerelement 34'' mit einer Zahnstange 48 versehen, die mit einem Getrieberad 48' kämmt, welches ebenfalls in kämmender Verbindung mit dem Ritzel 49' eines Elektromotors 49 steht. Auf diese Weise kann durch Umkehr der Drehrichtung des Elektromotors 49 das Trägerelement 34'' entsprechend dem Doppelpfeil Z horizontal hin- und herbewegt werden, wobei in einer jeweiligen Endstellung eine der Anordnungen 30', 31' aus Formwerkzeug und/oder Schneidwerkzeug vor die Materialaustrittsöffnung 22 der Extrusionspresse 2 bewegt werden kann und die andere Anordnung für Servicearbeiten zugänglich ist.

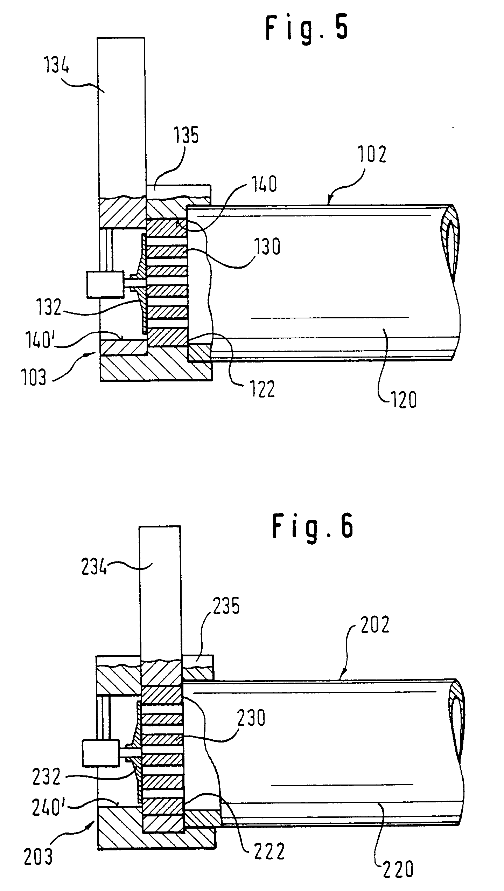

Eine Abwandlung der bisher beschriebenen Extrusionsmaschine ist in Fig. 5 dargestellt. Die Extrusionspresse 102 ist am vorderen Ende ihres Zylindergehäuses 120 im Bereich der Materialaustrittsöffnung 122 mit einem Wechslergehäuse 135 auf bereits beschriebene Weise verbunden. Das Wechslergehäuse 135 besitzt eine durchgehende Bohrung 140, in welche am dem Zylindergehäuse 120 zugewandten Ende ein Formwerkzeug 130 stationär, aber auswechselbar eingesetzt ist. Auf der von der Materialaustrittsöffnung 122 abgewandten Seite des Formwerkzeugs 130 ist ein rotierbares Trägerelement angeordnet, das auf bereits beschriebene Weise um seine parallel zur Achse des Zylindergehäuses 120 gelegene Achse drehbar ist. Das Trägerelement 134 weist dabei eine Mehrzahl von Bohrungen 140' auf, von denen in Fig. 5 nur eine gezeigt ist. In jeder dieser Bohrungen 140' ist ein Schneidwerkzeug 132 auf ebenfalls beschriebene Weise angeordnet.

Bei dieser Extrusionsmaschine läßt sich durch Verdrehen oder Verschwenken des Trägerlementes 134 jeweils ein neues Schneidwerkzeug hinter das Formwerkzeug 130 einbringen. Selbstverständlich können bei dieser Ausgestaltung auch die anderen beschriebenen Trägerelement-Versionen Verwendung finden.

Fig. 6 zeigt eine der Fig. 5 ähnliche Ausgestaltung, wobei jedoch das Schneidwerkzeug 232 in der Bohrung 240' des Wechslergehäuses 235 hinter dem Formwerkzeug 230 stationär angeordnet ist. Im hinteren Bereich des Wechslergehäuses 235, auf der der Materialaustrittsöffnung 222 zugewandten Seite des Schneidwerkzeugs 232, ist ein Trägerelement 234 vorgesehen, das auf die gleiche Weise wie die bislang beschriebenen Trägerelemente ausgebildet sein kann. Im Trägerelement 234 ist eine Mehrzahl von Formwerkzeugen 230 angeordnet, von hier nur eines gezeigt ist. Durch Verdrehen, Verschwenken oder translagtorisches Bewegen des jeweiligen Trägerelementes 234 kann zwischen den im Trägerelement 234 vorgesehenen Formwerkzeugen 230 gewechselt werden, wobei jeweils ein Formwerkzeug 230 in die Bohrung 240' zwischen die Materialaustrittsöffnung 222 und das Schneidwerkzeug 232 bewegt wird. Die Ausführungen von Fig. 5 und Fig. 6 können auch kombiniert werden, so daß je nach Bedarf entweder das Formwerkzeug oder das Schneidwerkzeug beliebig gewechselt werden können.

Die bisher beschriebenen Ausführungsbeispiele der Extrusionsmaschine nach der vorliegenden Erfindung gehen von einer horizontalen Anordnung der Extrusionspresse und der vertikalen Anordnung der Bewegungsebene des Trägerelementes im Wechslergehäuse aus. Genausogut kann aber auch die Extrusionspresse vertikal angeordnet werden und die Bewegungsebene des Trägerelmentes im Wechslergehäuse kann horizontal angeordnet sein; es sind aber auch alle zwischen diesen Extrempositionen liegenden Winkel möglich. Genausogut kann zwischen dem Zylindergehäuse 20 der Extrusionspresse 2 und dem Wechslergehäuse 35 ein Zwischenstück vorgesehen sein, das einen Winkelversatz zwischen der Achse 24 der Extrusionspresse 2 und in der Drehachse 36 des Trägerelementes 34 erzeugt. Die Befestigung des Wechslergehäuses 35 an dem Zylindergehäuse 20 kann auch über ein Scharnier erfolgen, wodurch das Wechslergehäuse 35 schnell und einfach weggeklappt werden kann, wenn ein Zugang zum Inneren des Zylindergehäuses 20 notwendig sein sollte, beispielsweise für Reinigungs- oder Wartungsarbeiten.

Eine bevorzugte Ausgestaltung der Anordnungen 30', 31' der Ausführung der Erfindung mit pendelndem Trägerelement 34' weist zwischen den Anordnungen 30', 31' einen beliebigen Winkel auf, wobei der Winkel gemessen ist als der Winkel, der zwischen den beiden von der Schwenkachse 36' des Trägerelementes 34' durch den jeweiligen Mittelpunkt der Anordnung 30' bzw. 31' aus Formwerkzeug und/oder Schneidwerkzeug hindurchgeht.

Die Extrusionsmaschine gemäß der vorliegenden Erfindung kann auch sinngemäß für Kunststoff- und Spritzgußwerkzeuge benützt werden, indem man statt Einlegeformwerkzeugen beispielsweise an einem horizontal austragenenden Extruder einen vertikal angebauten Wechsler mit aufgebauten Spritzgußwerkzeugen für Metall- oder Kunststoff-Einspritzung so anordnet, daß die Spritzgußwerkzeuge in schneller Taktfolge benutzt werden können. Auf diese Weise kann ohne weitere Nachteile die Spritzfolgetaktzeit erhöht werden, die Auskühlzeit verlängert werden und der Auswurf der gespritzten Teile auf eine dritte Station verlegt werden. Die Wirtschaftlichkeit wird durch dieses Verfahren erheblich gesteigert. Im Wechslersystem integrierbar sind Heizflächenanordnungen über Drehverbindungen mit Dampf oder über Schleifkontakte elektrisch versorgbar vorgesehen. Ebenfalls können Kühlanordnungen vorgesehen sein, wobei Drehverbindungen die Zufuhr spezieller Kühlmedien wie Kaltwasser oder Sole gestatten.

Die Wechslervorrichtung 3 kann auch als Nachrüstteil für bereits vorhandene Extruder bzw. Schheckenpressen jeglicher Größe oder Ausführung ausgestaltet sein.

Während des Wechselvorganges kann der Extrusions-Arbeitsdruck durch geeignete, dem Fachmann bekannte Vorrichtungen und Steuerungen herabgesetzt werden, der Arbeitsdruck kann aber auch bereits konstruktiv flexibel festgelegt sein.

Ein praktisches Beispiel für die Kosteneinsparung beim Einsatz der erfindungsgemäßen Extrusionsmaschine hat ergeben, daß bei einer Stundenleistung von 6000 kg/h je Extrusionspresse und bei einem Kilopreis von DM 2,-- für das in der Extrusionspresse verarbeitete Material ein Produktionsausfall von DM 12.000,-- in jeder Stillstandsstunde des Extruder entsteht. Rechnet man damit, daß die Maschine bis zu sechsmal am Tag abgeschaltet werden muß, um einen Messerwechsel vornehmen zu können, der 30 Minuten Zeit beansprucht, so werden mit der Erfindung bei 240 Arbeitstagen im Jahr mehrere Millionen DM an Produktionsausfall eingespart.

## Patentansprüche

1. Extrusionsmaschine mit einem Maschinenrahmen (1), einer Extrusionspresse (2) mit einer Materialeintrittsöffnung (21) und einer Materialaustrittsöffnung (22), einem Antrieb (23) für die Extrusionspresse (2) sowie einem im Bereich der Materialaustrittsöffnung (22) vorgesehenen Formwerkzeug (30) und einem diesem zugeordneten Schneidwerkzeug (32),
dadurch **gekennzeichnet,**
daß eine Wechslervorrichtung (3) vorgesehen ist, welche ein Trägerelement (34) für zumindest zwei auswechselbare Formwerkzeuge (30, 31) und/oder Schneidwerkzeuge (32, 33) aufweist, und daß das Trägerelement (34) in einer Ebene im wesentlichen parallel zur Ebene der Materialaustrittsöffnung (22) relativ zur Extrusionspresse (2) bewegbar angeordnet ist.

2. Extrusionsmaschine nach Anspruch 1,
dadurch **gekennzeichnet,**
daß das Trägerelement (34) kreisförmig ausgebildet und in einem exzentrisch an der Extrusionspresse (2) im Bereich von deren Materialaustrittsöffnung (22) angebrachten Wechslergehäuse (35) drehbar gelagert ist.

3. Extrusionsmaschine nach Anspruch 1,
dadurch **gekennzeichnet,**
daß das Trägerelement (34') teilkreisförmig ausgebildet und in einem exzentrisch an der Extrusionspresse (2) im Bereich von deren Materialaustrittsöffnung (22) angebrachten Wechslergehäuse (35') schwenkbar gelagert ist.

4. Extrusionsmaschine nach Anspruch 2 oder 3,
dadurch **gekennzeichnet,**
daß die Formwerkzeuge (30, 31) und/oder die Schneidwerkzeuge (32, 33) den gleichen radialen Abstand von der Dreh- bzw. Schwenkachse (36, 36') des Trägerelementes (34, 34') aufweisen.

5. Extrusionsmaschine nach Anspruch 1,
dadurch **gekennzeichnet,**
daß das Trägerelement (34'') in einem an der Extrusionspresse (2) im Bereich von deren Materialaustrittsöffnung (22) angebrachten Wechslergehäuse (35'') im wesentlichen translatorisch verschiebbar aufgenommen ist und wobei die jeweiligen Anordnungen (30', 31') aus Formwerkzeug und/oder Schneidwerkzeug in Verschieberichtung (Z) nebeneinander angeordnet sind.

6. Extrusionsmaschine nach einem der vorhergehenden Ansprüche,
dadurch **gekennzeichnet,**
daß mehr als zwei auswechselbare Formwerkzeuge (30, 31) und/oder Schneidwerkzeuge (32, 33) vorgesehen sind.

7. Extrusionsmaschine nach einem der vorhergehenden Ansprüche,
dadurch **gekennzeichnet,**
daß der Antrieb für die Bewegung des Trägerelements (34; 34'; 34'') von einem Elektromotor (38) gebildet ist.

8. Extrusionsmaschine nach einem der Ansprüche 1 bis 6,
dadurch **gekennzeichnet,**
daß der Antrieb für die Bewegung des Trägerelements (34; 34'; 34'') von einem Hydraulikelement gebildet ist.

9. Extrusionsmaschine nach einem der Ansprüche 7 oder 8,
dadurch **gekennzeichnet,**
daß zwischen dem Motor (38) und dem Trägerelement (34; 34'; 34'') eine Antriebskette (38') vorgesehen ist.

10. Extrusionsmaschine nach einem der Ansprüche 7 oder 8,
dadurch **gekennzeichnet,**
daß zwischen dem Motor (38) und dem Trägerelement (34; 34'; 34'') ein Schneckenradantrieb vorgesehen ist.

11. Extrusionsmaschine nach einem der Ansprüche 7 oder 8,
dadurch **gekennzeichnet,**
daß zwischen dem Motor (38) und dem Trägerelement (34; 34') ein Zahnradantrieb vorgesehen ist.

12. Extrusionsmaschine nach einem der Ansprüche 7 oder 8,
dadurch **gekennzeichnet,**
daß zwischen dem Motor (38) und dem Trägerelement (34'') ein Zahnstangenantrieb vorgesehen ist.

13. Extrusionsmaschine nach einem der vorhergehenden Ansprüche,
dadurch **gekennzeichnet,**
daß das Schneidwerkzeug (32, 33) von einer auf der von der Extrusionspresse (2) abgewandten Seite des Formwerkzeugs (30, 31) angeordneten, rotierbar gelagerten Messeranordnung gebildet ist, die von einem Schneidantrieb (37) beaufschlagt ist.

14. Extrusionsmaschine nach Anspruch 13,
dadurch **gekennzeichnet,**
daß im Antriebsstrang zwischen Schneidantrieb (37) und Schneidwerkzeug (32,33) zumindest ein Umlenkgetriebe (37') vorgesehen ist.

15. Extrusionsmaschine nach einem der vorhergehenden Ansprüche,
dadurch **gekennzeichnet,**
daß der Schneidantrieb (37) von einem Elektromotor gebildet ist.

16. Extrusionsmaschine nach einem der Ansprüche 1 bis 4,
dadurch **gekennzeichnet,**
daß der Schneidantrieb (37) von einem Hydraulikmotor gebildet ist.

17. Extrusionsmaschine nach einem der Ansprüche 1 bis 14,
dadurch **gekennzeichnet,**
daß der Schneidantrieb (37) von einem Pneumatikmotor gebildet ist.

18. Extrusionsmaschine nach einem der vorhergehenden Ansprüche,
dadurch **gekennzeichnet,**
daß im Antriebsstrang zwischen Schneidantrieb (37) und Schneidwerkzeug (32,33) zumindest eine Ausgleichswelle vorgesehen ist.

19. Extrusionsmaschine nach einem der vorhergehenden Ansprüche,
dadurch **gekennzeichnet,**
daß die Wechsleranordnung (3) scharnierartig klappbar an der Extrusionspresse (2) angebracht ist.

20. Extrusionsmaschine nach einem der Ansprüche 1 bis 18,
dadurch **gekennzeichnet,**
daß die Wechsleranordnung (3) mit der Extrusionspresse (2) fest verschraubt ist.

21. Extrusionsmaschine nach einem der vorhergehenden Ansprüche,
dadurch **gekennzeichnet,**
daß im Wechslersystem (3) Heiz- und/oder Kühlanordnungen vorgesehen sind.

## Claims

1. Extrusion machine comprising a machine frame (1), an extrusion press (2) with a material inlet opening (21) and a material outlet opening (22), a drive (23) for the extrusion press (2) as well as a die (30) adjacent the material outlet opening (22) and a cutting tool (32) associated with said die (30),
**characterized** in
that a changer mechanism (3) is provided, which has a support member (34) for at least two changeable dies (30, 31) and/or cutting tools (32, 33), and that the the support member (34) is arranged for movement in a plane substantially parallel to the plane of the material outlet opening (22) relative to the extrusion press (2).

2. Extrusion machine according to claim 1,
**characterized** in
that the support member (34) is circular and is mounted for rotation in a changer casing (35) fitted eccentrically to the extrusion press (2) adjacent its material outlet opening (22).

3. Extrusion machine according to claim 1,
**characterized** in
that the support member (34') has a pitch circular construction and is pivotably mounted in a changer casing (35') eccentrically fitted to the extrusion press (2) adjacent its material outlet opening (22).

4. Extrusion machine according to claim 2 or 3,
**characterized** in
that the dies (30, 31) and/or the cutting tools (32, 33) have the same radial spacing from the rotation or pivot axis (36, 36') of the support member (34, 34').

5. Extrusion machine according to claim 1,
**characterized** in
that the support member (34'') is mounted for a substantially translatory displacement in a changer casing (35'') fitted to the extrusion press (2) adjacent its material outlet opening (22) and the respective arrangements (30', 31') formed by the die and/or cutting tool being juxtaposed in the translation direction (Z).

6. Extrusion machine according to one of the preceding claims,
**characterized** in
that there are more than two replaceable dies (30, 31) and/or cutting tools (32, 33).

7. Extrusion machine according to one of the preceding claims,
**characterized** in
that the drive for the movement of the support member (34; 34'; 34'') is formed by an electric motor (38).

8. Extrusion machine according to one of the claims 1 to 6,
**characterized** in
that the drive for the movement of the support member (34; 34'; 34'') is formed by a hydraulic member.

9. Extrusion machine according to claim 7 or 8,
**characterized** in
that a drive chain (38') is provided between the motor (38) and the support member (34; 34'; 34'').

10. Extrusion machine according to claim 7 or 8,
**characterized** in
that a worm wheel drive is provided between the motor (38) and the support member (34; 34'; 34'').

11. Extrusion machine according to claim 7 or 8,
**characterized** in
that a gear drive is provided between the motor (38) and the support member (34; 34').

12. Extrusion machine according to claim 7 or 8,
**characterized** in
that a rack drive is provided between the motor (38) and the support member (34'').

13. Extrusion machine according to one of the preceding claims,
**characterized** in
that the cutting tool (32, 33) is formed by a knife arrangement mounted for rotation on a side of the die (30, 31) remote from the extrusion press (2) and which is subject to the action of a cutting drive (37).

14. Extrusion machine according to claim 13,
**characterized** in
that there is at least one deflection gear (37') in the drive line between the cutting drive (37) and the cutting tool (32, 33).

15. Extrusion machine according to one of the preceding claims,
**characterized** in
that the cutting drive (37) is formed by an electric motor.

16. Extrusion machine accroding to one of the claims 1 to 4,
**characterized** in
that the cutting drive (37) is formed by a hydraulic motor.

17. Extrusion machine according to one of the claims 1 to 14,
**characterized** in
that the cutting drive (37) is formed by a pneumatic motor.

18. Extrusion machine according to one of the preceding claims,
**characterized** in
that there is at least one differential shaft in the drive line between the cutting drive (37) and the cutting tool (32, 33).

19. Extrusion machine according to one of the preceding claims,
**characterized** in
that the changer mechanism (3) is hingedly tiltable attached to the extrusion press (2).

20. Extrusion machine according to one of the claims 1 to 18,
**characterized** in
that the changer mechanism (3) is securely attached to the extrusion press (2).

21. Extrusion machine according to one of the preceding claims,
**characterized** in
that heating and/or cooling arrangements are provided in the changer mechanism (3).

## Revendications

1. Extrudeuse avec un bâti (1) de machine, une presse à extruder (2) avec une ouverture (21) pour l'entrée de matière et une ouverture (22) pour la sortie de matière, un mécanisme d'entraînement (23) pour la presse à extruder (2), ainsi qu'un outil de formage (30) prévu au niveau de l'ouverture (22) pour la sortie de matière et un outil de coupe (32) associé à celui-ci, ***caractérisée en ce qu'***un dispositif changeur (3) est prévu, qui présente un élément porteur (34) pour au moins deux outils de formage (30, 31) et/ou outils de coupe (32, 33) interchangeables, et ***en ce que*** l'élément porteur (34) est placé dans un plan sensiblement parallèle au plan de l'ouverture (22) pour la sortie de matière d'une manière mobile par rapport à la presse à extruder (2).

2. Extrudeuse selon la Revendication 1, ***caractérisée en ce que*** l'élément porteur (34) est de configuration circulaire et est monté rotatif dans un boîtier changeur (35) rapporté de manière excentrée sur la presse à extruder (2) au niveau de son ouverture (22) pour la sortie de matière.

3. Extrudeuse selon la Revendication 1**, *caractérisée en ce que*** l'élément porteur (34') est configuré en arc de cercle et est monté pivotant dans un boîtier changeur (35') rapporté de manière excentrée sur la presse à extruder (2) au niveau de son ouverture (22) pour la sortie de matière.

4. Extrudeuse selon la Revendication 2 ou 3, ***caractérisée en ce que*** les outils de formage (30, 31) et/ou les outils de coupe (32, 33) présentent la même distance radiale à l'axe de rotation ou de pivotement (36, 36') de l'élément porteur (34, 34').

5. Extrudeuse selon la Revendication 1, ***caractérisée en ce que*** l'élément porteur (34'') est logé de manière mobile essentiellement en translation dans un boîtier changeur (35'') rapporté sur la presse à extruder (2) au niveau de son ouverture (22) pour la sortie de matière, et dans laquelle les ensembles respectifs (30', 31') d'outils de formage et/ou de coupe sont placés côte à côte dans la direction de déplacement (Z).

6. Extrudeuse selon l'une quelconque des Revendications précédentes, ***caractérisée en*** **ce qu**'il est prévu plus de deux outils de formage (30, 31) et/ou de coupe (32, 33) interchangeables.

7. Extrudeuse selon l'une quelconque des Revendications précédentes, ***caractérisée en ce que*** le mécanisme d'entraînement destiné au mouvement de l'élément porteur (34 ; 34'; 34'') est formé d'un moteur électrique (38).

8. Extrudeuse selon l'une quelconque des Revendications 1 à 6, ***caractérisée en ce*** le mécanisme d'entraînement destiné au mouvement de l'élément porteur (34 ; 34'; 34'') est formé d'un élément hydraulique.

9. Extrudeuse selon l'une quelconque des Revendications 7 ou 8, ***caractérisée en ce qu***'entre le moteur (38) et l'élément porteur (34 ; 34'; 34''), il est prévu une chaîne d'entraînement (38').

10. Extrudeuse selon l'une quelconque des Revendications 7 ou 8, ***caractérisée en ce qu***'entre le moteur (38) et l'élément porteur (34 ; 34'; 34''), il est prévu un entraînement à vis sans fin.

11. Extrudeuse selon l'une quelconque des Revendications 7 ou 8, ***caractérisée en ce qu***'entre le moteur (38) et l'élément porteur (34 ; 34'), il est prévu un entraînement à roue dentée.

12. Extrudeuse selon l'une quelconque des Revendications 7 ou 8, ***caractérisée en ce qu***'entre le moteur (38) et l'élément porteur (34''), il est prévu un entraînement à crémaillère.

13. Extrudeuse selon l'une quelconque des Revendications précédentes, ***caractérisée en ce que*** l'outil de coupe (32, 33) est formé d'un ensemble à couteaux monté rotatif sur un côté de l'outil de formage (30, 31) qui est opposé à la presse à extruder (2), ensemble qui est mis sous charge par un entraînement de coupe (37).

14. Extrudeuse selon la Revendication 13, ***caractérisée en ce que***, sur la ligne d'entraînement entre l'entraînement de coupe (37) et l'outil de coupe (32, 33), il est prévu au moins un mécanisme de renvoi (37').

15. Extrudeuse selon l'une quelconque des Revendications précédentes, ***caractérisée en ce que*** l'entraînement de coupe (37) est formé d'un moteur électrique.

16. Extrudeuse selon l'une quelconque des Revendications 1 à 4, ***caractérisée en ce que*** l'entraînement de coupe (37) est formé d'un moteur hydraulique.

17. Extrudeuse selon l'une quelconque des Revendications 1 à 14, ***caractérisée en ce que*** l'entraînement de coupe (37) est formé d'un moteur pneumatique.

18. Extrudeuse selon l'une quelconque des Revendications précédentes, ***caractérisée en ce que***, sur la ligne d'entraînement entre l'entraînement de coupe (37) et l'outil de coupe (32, 33), il est prévu au moins un arbre compensateur.

19. Extrudeuse selon l'une des Revendications précédentes, ***caractérisée en ce que*** l'ensemble changeur (3) est monté escamotable à la façon d'une charnière sur la presse à extruder (2).

20. Extrudeuse selon l'une quelconque des Revendications 1 à 18 ***caractérisée en ce que*** l'ensemble changeur (3) est vissé fixement à la presse à extruder (2).

21. Extrudeuse selon l'une quelconque des Revendications précédentes, ***caractérisée en ce que*** des dispositifs de chauffage et de refroidissement sont prévus dans le système changeur (3).
